# EUROPEAN PATENT SPECIFICATION

(11) **EP 0 691 228 B1**
(45) Date of publication and mention of the grant of the patent: **16.09.1998**
(21) Application number: 95110510.5
(22) Date of filing: 05.07.1995
(51) Int. Cl.: B60H 1/00, F24F 13/10

(54) **Air passage switching system and vehicular air conditioning system**
Luftkanälensystem und Klimaanlage in einem Kraftfahrzeug
Système de passage d'air et de conditionnement d'air dans un véhicule

(30) Priority: 06.07.1994 JP 154446/94
(43) Date of publication of application: 10.01.1996
(73) Proprietor: DENSO CORPORATION, Kariya-City Aichi-Pref. 448 (JP)
(72) Inventor: Sumiya, Yasuhiko, Hekinan-city, Aichi-pref. (JP); Shikata, Kazushi, Kariya-city, Aichi-pref. (JP)
(74) Representative: Klingseisen, Franz, Dipl.-Ing.

(56) References cited:
- EP-A- 0 185 856
- EP-A- 0 423 778
- DE-A- 3 421 323
- FR-A- 2 159 138
- FR-A- 2 696 382
- US-A- 5 062 352

## Description

The invention relates to an air passage changing system according to the preamble of claim 1.

Such an air passage changing system is known from FR-A-2 696 382, wherein for the face air blowing operation a single opening is provided in the rotary door, so the center and side face blowing operation cannot be controlled separately.

In systems such as the one described in Japanese Utility Model Unexamined Publication No. 50-65151, a cylindrical rotary door acting as air outlet changing door device is rotatably arranged downstream of a heater (or heater core) of a vehicular air conditioning system so that it may be rotated to open and close multiple blown air passages formed in the case member of the air conditioning system, such as face blown air passages, defroster blown air passages and foot blown air passages.

Japanese Utility Model Unexamined Publication No. 57-131310 discloses an airflow changing unit which has a half-cylindrical shape at an end proximate air flow passages. Opposite end portions of the unit casing have outlets for a defroster and a heater, respectively, and a curved side portion of the unit has a vent outlet. Two disk-shaped plates having openings corresponding to the defroster and heater outlets in the casing, respectively, and are disposed proximate thereto. A quarter-cylindrical damper is similarly disposed proximate the vent outlet. By selectively positioning the disks and damper, it is possible to provide various combinations of defroster, heater and vent air flow to implement various heating and cooling modes.

In the first aforementioned system, the multiple blown air passages formed in the air conditioning system case member are arranged in the circumferential direction of the cylindrical shape of the rotary door. In order to increase the rate of flow of the air to be blown into the vehicle compartment in either system, it is necessary to increase the effective areas of the blown air passages by increasing the diameter of the rotary door or the rotational angle of travel of the rotary door.

According to the former method, however, the vehicular air conditioning system becomes quite large, thus causing problems in that the degree of freedom for the layout of the air conditioning system in the compartment is restricted and the operating force required to move the rotary door is increased as a result of an increase in the weight of the rotary door.

According to the latter method, on the other hand, when the extent of operation of the door operating mechanism is to be maintained at a constant value, the rotational angle of travel of the rotary door cannot be increased unless the coupling between the door operating mechanism and the rotary door is moved close to the rotational axis of the rotary door.

Thus, if the coupling between the door operating mechanism and the rotary door is moved close to the axis of the rotary door, the distance between the axis of the rotary door and the aforementioned coupling is reduced, thereby causing a problem in that the force for operating the rotary door is increased.

The aforementioned problem of the increase in the operating force is exacerbated when the door operating mechanism is manual because it requires greater user effort. If the door operating mechanism is automatic and uses an actuator such as a servo motor, on the other hand, it is likely that the size of the door operating mechanism must be increased.

### SUMMARY OF THE INVENTION

The present invention has been conceived in view of the problems described above and has an object of providing an air passage changing system capable of increasing the air flow from the blown air passages of the case member without increasing the diameter or rotational angle of the cylindrical rotary door, and a vehicular air conditioning system using the air passage changing system.

This object is achieved by the features in the characterizing part of claim 1.

Since the multiple blown air passages are arranged in the axial direction of the cylindrical shape of the rotary door in the door mounting portion for mounting the cylindrical rotary door, their opening areas can be easily retained, as necessary, by elongating them in the axial direction so that the air flow of the blown air passages of the case member can be increased without increasing the diameter and rotational angle of the cylindrical rotary door. As a result, the flow of the air from the blown air passages can be increased without disadvantages such as an increase in the mounting space required for a large cylindrical rotary door or an increase in the force required for operating the rotary door.

Moreover, when the multiple blown air passages are arranged in the axial direction of the cylindrical shape of the rotary door, there is greater design freedom for arranging the multiple blown air passages and for setting the opening areas of the multiple blown air passages than in prior art systems in which the multiple blown air passages are arranged in the circumferential direction.

The above-described system may include a face air outlet for blowing out the conditioned air toward the head of a passenger, and defroster air outlets for blowing out the conditioned air toward the windshield of the vehicle, where the multiple blown air passages of the door mounting portion are the face blown air passage communicating with the face air outlet and the defroster blown air passages communicating with the defroster air outlets.

Additionally, it is possible that the face blown air passage is arranged in an axially central portion of the rotary door, and the defroster blown air passages are arranged in axially sides portions of the central face blown air passage.

Also, the above-described system may include a central face air outlet for blowing out the conditioned air toward the head of the passenger close the central portion of the compartment, and side face air outlets capable of blowing out the conditioned air toward both the head of the passenger close to the side portions of the compartment and the windows at the side portions of the compartment, where the multiple blown air passages of the door mounting portion are the central face blown air passage communicating with the central face air outlet and the side face blown air passages communicating with the front face air outlets.

In this system, the central face blown air passage may be arranged in the axial central portion of the rotary door, and the side face blown air passages may be arranged at the two sides of the central face blown air passage arranged in the axially central portion.

The above systems may also include foot air outlets for blowing out the conditioned air toward the feet of the passenger, and foot blown air passages communicating with the foot air outlets and arranged in the door mounting portion in positions circumferentially different from the multiple blown air passages, where the communications between the foot blown air passages and the air passage are also controlled according to the change in the rotational position of the rotary door.

Also in the above-described systems, the air openings of the rotary door of the rotary door may be disposed independently of one another to correspond to the blown air passages, and the multiple air openings may have longer circumferential lengths than those of the individual blown air passages.

In this way, the multiple air openings of the rotary door are individually provided to correspond to the aforementioned individual blown air passages and are made circumferentially longer than the individual blown air passages. As a result, even if the door operating mechanism is loosened to displace the stop position of the rotary door, this stop position displacement can be satisfactorily absorbed by the aforementioned setting of the circumferential lengths.

Also in the above-described systems, it is possible that the rotary door has a cylindrical shape resulting from joining multiple cylindrical elements split in the axial direction thereof. Further, it is possible that the rotary door is monolithically molded of a resin.

Since the rotary door is formed into the cylindrical shape by joining the multiple cylindrical members split in the axial direction, the mold structures for molding the individual cylindrical members can be simplified when the individual cylindrical members are molded from a resin, and the areas and shapes of the air openings are easy to set. Also, since the rotary door may be monolithically molded from a resin into a cylindrical shape, it can be handled as a monolithic body and assembled with ease.

### BRIEF DESCRIPTION OF THE DRAWINGS

Additional objects and advantages of the present invention will be more readily apparent from the following detailed description of preferred embodiments thereof when taken together with the accompanying drawings in which:
FIG. 1 is a cross-section of an automotive air conditioning system showing a first embodiment of the present invention;
FIGS. 2A and 2B show the operation of the first embodiment in a FACE mode, where FIG. 2A is a cross-section along line A - A of FIG. 7, and FIG. 2B is a cross-section along line B - B of FIG. 7;
FIGS. 3A and 3B show the operation of the first embodiment in a BI-LEVEL mode, where FIG. 3A is a cross-section along line A - A of FIG. 7, and FIG. 2B is a cross-section along line B - B of FIG. 7;
FIGS. 4A and 4B show the operation of the first embodiment in a FOOT mode, where FIG. 4A is a cross-section along line A - A of FIG. 7, and FIG. 4B is a cross-section along line B - B of FIG. 7;
FIGS. 5A and 5B show the operation of the first embodiment in a FOOT/DEFROSTER compatible mode, where FIG. 5A is a cross-section along line A - A of FIG. 7, and FIG. 5b is a cross-section along line B - B of FIG. 7;
FIG. 6 shows the operation of the first embodiment in a DEFROSTER mode, where FIG. 6A is a cross-section along line A - A of FIG. 7, and FIG. 6B is a cross-section along line B - B of FIG. 7;
FIG. 7 is a front elevation view of a door mounting portion of the first embodiment;
FIG. 8A is an exploded perspective view of a rotary door according to the first embodiment, and FIG. 8B is a perspective view of the same rotary door after assembly;
FIG. 9A is a section of a portion of the rotary door according to the first embodiment, and FIG. 9B is a cross-section along line C - C of FIG. 9A;
FIG. 10 is a perspective view of a door mounting portion of a second embodiment according to the present invention; and
FIG. 11 is a perspective view of a rotary door of a third embodiment according to the present invention.

### DETAILED DESCRIPTION OF THE PRESENTLY PREFERRED EXEMPLARY EMBODIMENTS

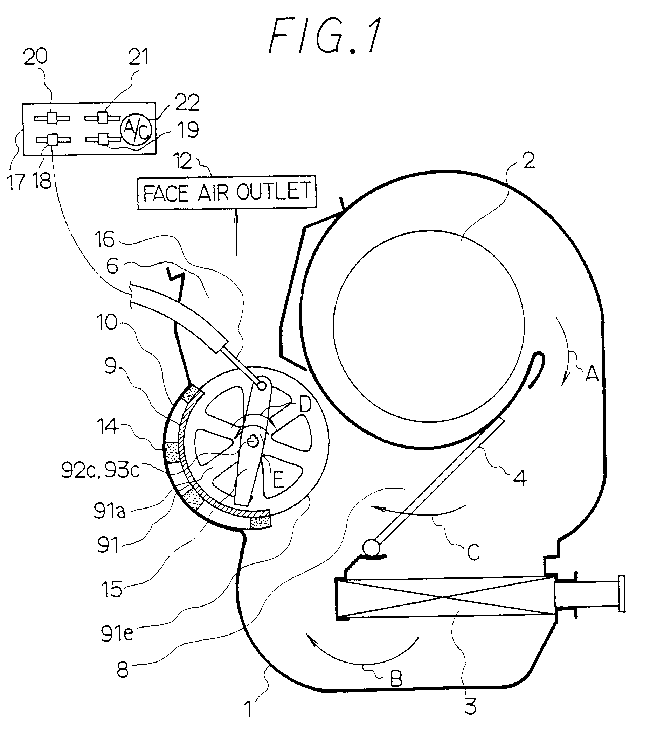

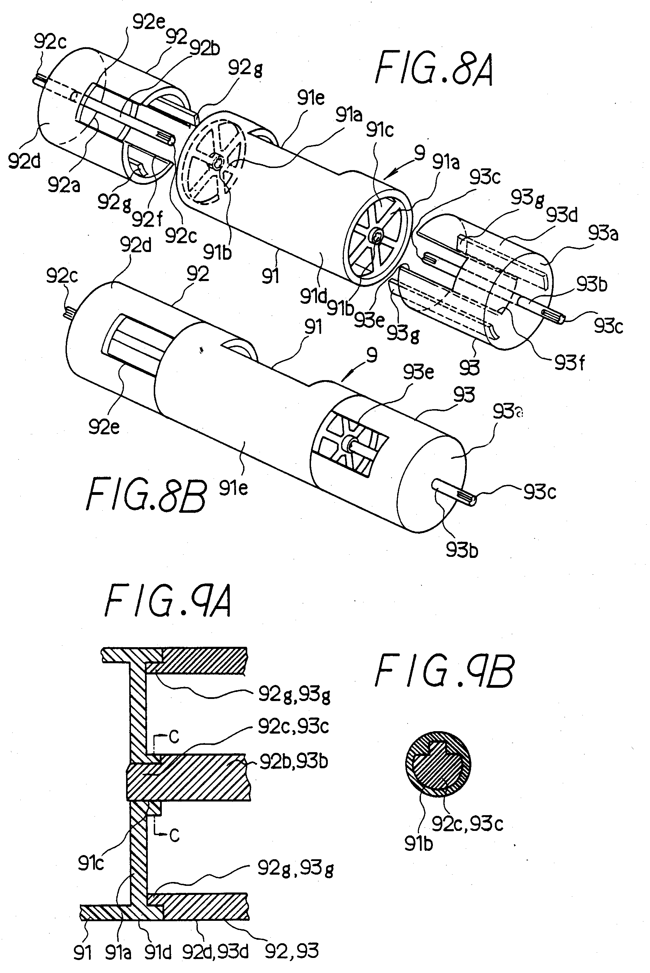

The presently preferred exemplary embodiments of the present invention will now be particularly described with reference to the accompanying drawings. FIGS. 1 to 9 show a first embodiment of the present invention. In FIG. 1, a case member 1 forming an air passage is constructed by joining two case halves which are made from a resin to have split faces in the vertical direction of FIG. 1.

In this case member 1, a centrifugal blower (e.g., a Silocco fan) 2 is located in the upper right-hand portion of FIG. 1 to act as a blower. This blower 2 has its inlet connected to a suction duct (not shown) through which it draws air into the inside of the case member 1 and blows it in the direction of arrow A.

Here, the aforementioned suction duct has an internal air inlet and an external air inlet (also not shown), and is equipped with a switch damper for alternatively opening one of the air inlets. Also, an evaporator (i.e., a coolant evaporator) is disposed in the suction duct. This evaporator functions as cooling device when a refrigerating cycle is run. In this refrigerating cycle, the coolant is circulated by a compressor driven by the vehicular engine.

As shown in FIG. 1, a heater core 3 is located at the lower right-hand portion of the case member 1 to act as a heating device. This heater core 3 is a hot water type heat exchanger for heating the blown air using a heat source of engine cooling water, i.e., hot water.

An air mixing door 4 acting as a temperature adjusting device is disposed at the upstream portion of the aforementioned heater core 3. This air mixing door 4 has its degree of opening adjusted according to a set temperature to control the temperature of the air blown into the vehicle passenger compartment by adjusting the ratio of the air blown by the aforementioned blower 2 in the direction of arrow B through the heater core 3, and cold air flowing in the direction of arrow C which bypasses the heater core 3.

Moreover, a door mounting portion 10 having an arcuate circumference is integrally molded in the upper left-hand portion of the case member 1, that is, the portion downstream of the aforementioned heater core 3 and air mixing door 4. Hot air (indicated by arrow B) heated by the aforementioned heater core 3 and the cold air (indicated by arrow C) flows into this door mounting portion 10 to pass through a bypass passage 8 of the aforementioned heater core 3 in accordance with degree of opening of the air mixing door 4.

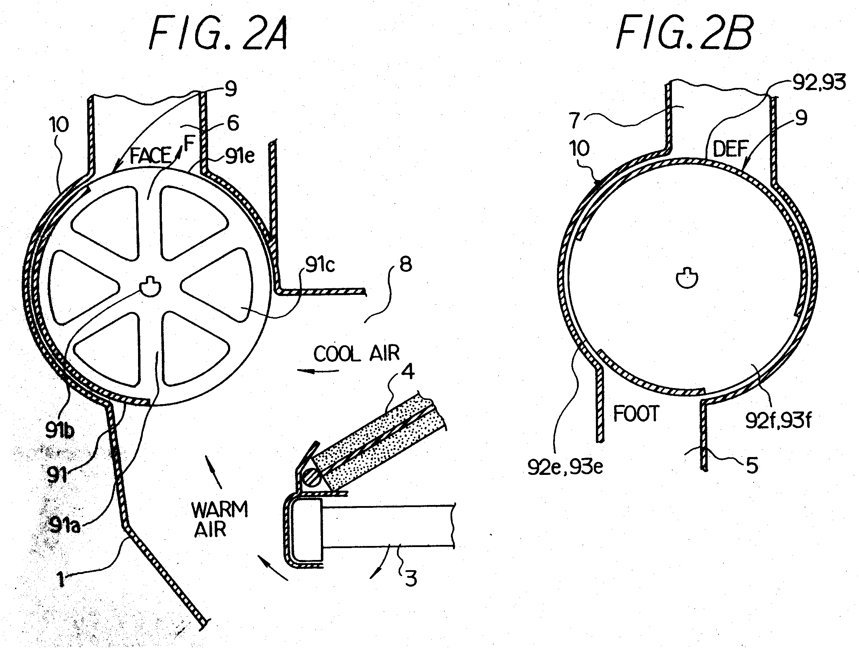

A cylindrical rotary door 9 is rotatably mounted in this door mounting portion 10 as will be described in detail below. This rotary door 9 acts as an air passage switching system for selectively opening and closing a multiple blown air passages 5, 6 and 7 as shown in FIGS. 2 - 6.

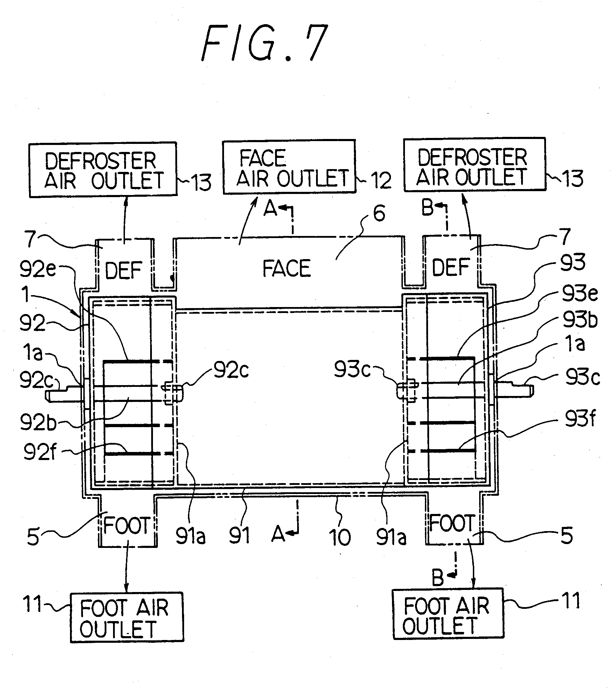

Of the aforementioned three blown air passages 5, 6 and 7, the face blown air passage 6 and the defroster blown air passages 7 are opposite one another in the axial direction of the rotary door 9, as shown in FIG. 7. In the first embodiment, the face blown air passage 6 is arranged in the center of the rotary door 9, and the defroster blown air passages 7 are arranged at the left-hand and right-hand sides of the rotary door 9.

The face blown air passage 6 and defroster blown air passages 7 are arranged at upper positions with respect to the circumferential direction of the door mounting portion 10, as shown in FIGS. 2 - 6, and the foot blown air passages 5 are arranged at lower positions of the circumferential direction of the door mounting portion 10.

The aforementioned foot blown air passages 5 communicate with foot air outlets 11 for blowing out the conditioned air (mainly hot air) to the feet of passengers in the vehicle passenger compartment. The face blown air passage 6 communicates with a face air outlet 12 for blowing out the conditioned air (mainly cold air) to the head of the passengers. On the other hand, the defroster blown air passages 7 communicate with defroster air outlets 13 for blowing out the conditioned air (mainly hot air) to the front windshield of the automobile. These individual air outlets 11, 12 and 13 are known in the art, and a detailed description thereof will be omitted for brevity.

With the system thus far described, when the blower 2 is driven, the internal passenger compartment air or the external air is drawn from the suction duct through the evaporator into the case member 1 so that it flows inside the case member 1, as shown by arrows A, B and C, to have its temperature adjusted to a set level by the degree of opening of the air mixing door 4 until it is blown out from the individual air outlets 11, 12 and 13 in the passenger compartment through the blown air passages 5, 6 and 7. In this present embodiment, the air blows according to five blow modes can be selected by the three blown air passages 5, 6 and 7, although detailed hereinafter.

As noted above, the air passage switching system is equipped with the rotatable cylindrical rotary door 9. The gap between the rotary door 9 and the door mounting portion 10 of the case member 1 is sealed by seal members 14 such as films or other suitable elements.

In this embodiment, the rotary door 9 is constructed by joining three cylindrical members 91, 92 and 93 molded from a resin. The central cylindrical member 91 is equipped with a number of radial stays 91a at its left-hand and right-hand axial end portions and is formed with a non-circular (e.g., poppet-shaped) stem hole 91b at its center portion.

The aforementioned stays 91a form air holes 91c therebetween. The cylindrical member 91 has its circumference 91d formed with an air opening 91e extending over an angular range of more than 180°, as shown in FIGS. 2 to 6A. As a result, the circumference 91d of the cylindrical member 91 has an arcuate shape extending over an angular range of about 150°.

The aforementioned air opening 91e plays a role as the communication passage with the face blown air passage 6 and a role as an inlet passage for providing the cold air from the bypass passage 8 and the hot air from the heater core 3 to the interior of the rotary door 9.

The left-hand and right-hand cylindrical members 92 and 93 are equipped with disc-shaped side plate portions 92a and 93a for closing their respective sides, and at their center portions with stem portions 92b and 93b extending axially therefrom to the two sides. Engaging portions 92c and 93c having non-circular shapes (e.g., poppet shapes in the present embodiment) are formed at the leading ends of these stem portions 92b and 93b.

In the circumferences 92d and 93d of the cylindrical members 92 and 93, axially elongated air openings 92e and 92f, and 93e and 93f open as shown in FIGS. 2 to 6B and FIG. 8. These air openings 92e and 92f, and 93e and 93f play roles as the communication passages with the foot blown air passages 5 or the defroster blown air passages 7.

The circumferential edges 92d and 93d have their individual inner walls molded integrally with multiple (e.g., two in the present embodiment) ribs 92g and 93g having their leading ends protruding into the central cylindrical member 91 from the end portions of the circumferential edges 92d and 93d.

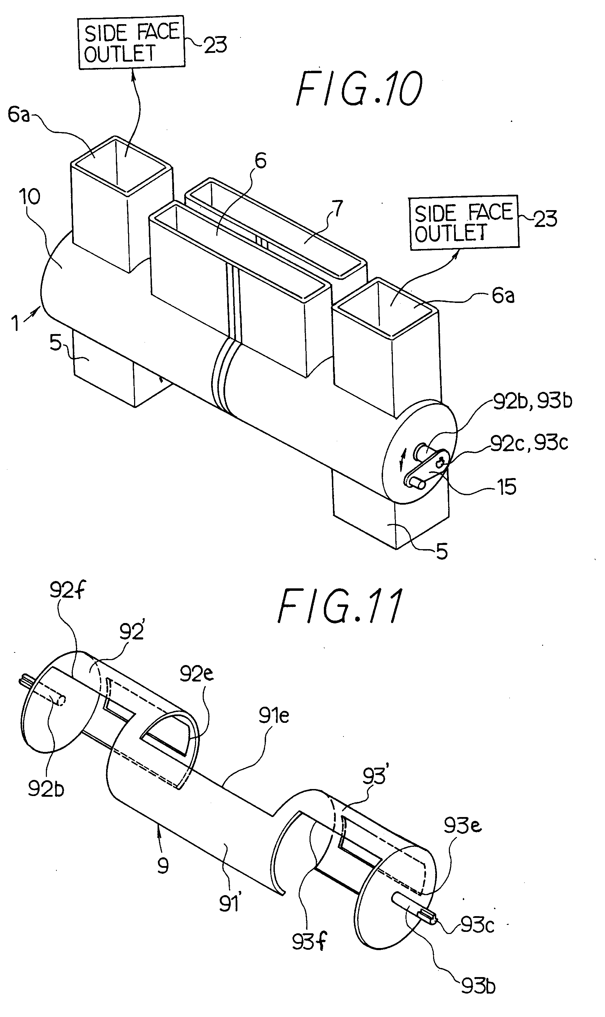

The three cylindrical members 91, 92 and 93 thus far described are joined, as shown in FIG. 9, by press-fitting the engaging portions 92c and 93c of the inner leading ends of the stem portions 92b and 93b in the stem holes 91b and by press-fitting the leading ends of the ribs 92g and 93g in the inner face of the circumference 91d of the cylindrical member 91. Here, the engaging portions 92c and 93c are press-fitted into the non-circular shape of the stem holes 91b so that the three cylindrical members 91, 92 and 93 can be reliably joined while being prevented from rotating.

Moreover, the outer side portions of the stem portions 92b and 93b are rotatably supported by circular stem holes 1a (as shown in FIG. 7) in the walls of the case member 1, and one of the engaging portions 92c and 93c of their outer end portions is fixedly joined by fitting it into a non-circular shape in the center hole of a lever 15 (shown in FIG. 1) of the door control mechanism which is arranged outside of the case member 1.

One end of a control cable 16 is joined to the leading end portion of the lever 15, the other end of which is connected to a blow mode change lever 18 of an air conditioner control panel 17 which is disposed in the instrument panel of the passenger compartment. The blow mode change lever 18 is manually operated by a passenger. As a result, the rotary door 9 is angularly displaced as indicated by arrows D and E responsive to the operation of the blow mode change lever 18. Thus, the rotary door 9 plays the role as the air passage changing system to open and close the individual blow passages 5, 6 and 7 in accordance with the operated position of the blow mode change lever 18.

In addition to the blow mode lever 18, the air condition control panel 17 is equipped with a temperature control lever 19 for controlling the degree of opening of the air mixing door 4, an air flow control lever 20 for controlling the air flow of the blower 2, an internal/external air supply change lever 21 for controlling the internal/external air to be drawn in; and an air conditioner switch 22 for turning the compressor of the refrigerating cycle on and off.

When the blower 2 is turned on, it blows air in the direction of arrow A of FIG. 1 in the case member 1. The cold air passes through the bypass passage 8 in accordance with the degree of opening of the air mixing door 4 as indicated by arrow C, and the hot air heated by the heater core 3 flows as indicated by arrow B.

Subsequently, these cold and hot currents are guided from the air opening 91e of the central cylindrical member 91 of the rotary door 9 to the inner circumference of the rotary door 9, in which the cold and hot air is mixed to provide air conditioned air of a desired temperature. In the present embodiment, when a user actuates the blow mode change lever 18 in the passenger compartment, this actuation is transmitted directly to the rotary door 9 through the control cable 16 and the lever 15 so that the rotary door 9 is angularly displaced in the direction of arrow D or E. Specifically, at this time, the rotary door 9 is displaced at one of the positions shown in FIGS. 2 to 6, so that any of the following five blow modes is selected.

If the FACE mode (i.e., face blow mode) is selected by the blow mode change lever 18, the air opening 91e of the central cylindrical member 91 of the rotary door 9 completely overlaps the face blown air passage 6 to fully open the face blown air passage 6. Also, the left-hand and right-hand cylindrical members 92 and 93 fully close the defroster blown air passages 7 and the foot blown air passages 5. As a result, the conditioned air blows only through the face blow air passage 6, as indicated by arrow F, from the face air outlet 12 toward the passenger's feet to implement the FACE mode.

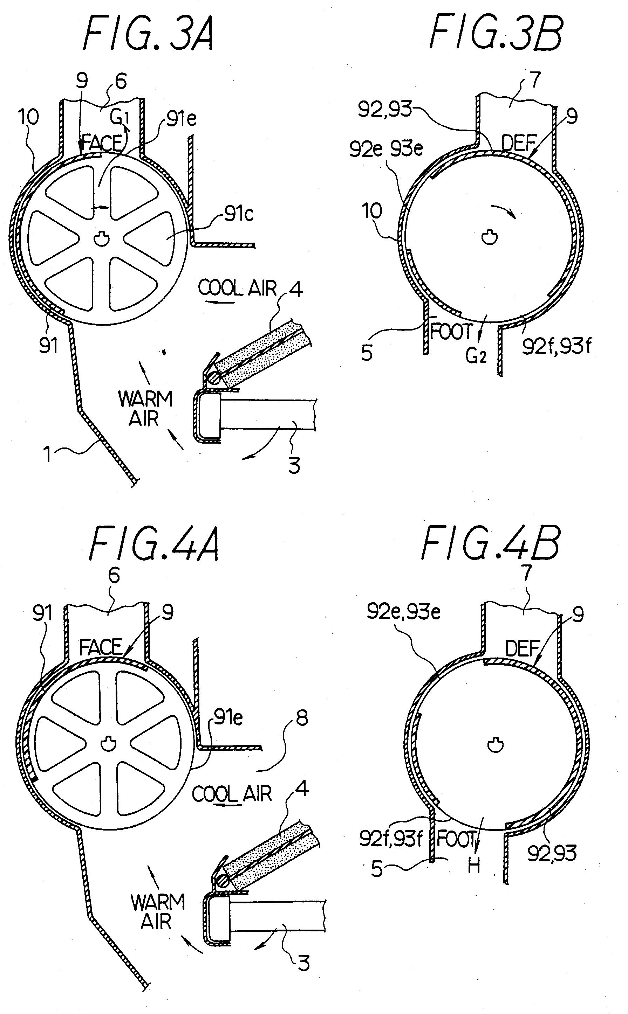

FIGS. 3A and 3B show the state of the rotary door 9 when the BI-LEVEL mode is selected. In this case, the air opening 91e of the central cylindrical member 91 of the rotary door 9 opens a portion of the face blown air passage 6. Simultaneously, the air openings 92f and 93f of the left-hand and right-hand cylindrical members 92 and 93 partially open the foot blown air passages 5 while fully closing the defroster blown air passages 7. As a result, the air flows into the interior of the rotary door 9 and is blown out through the two blown air passages 5 and 6, as indicated by arrows G1 and G2, simultaneously from both the foot air outlets 11 and the face air outlet 12 to implement the BI-LEVEL mode.

FIGS. 4A and 4B show the position of the rotary door 9 when the FOOT mode (i.e., foot blow mode) is selected. In this case, the central cylindrical member 91 of the rotary door 9 fully closes the face blown air passage 6. Simultaneously, the air openings 92f and 93f of the left-hand and right-hand cylindrical members 92 and 93 completely overlap the foot blown air passages 5 to fully open the foot blown air passages 5 and fully close the defroster blown air passages 7. As a result, the air having flown into the inside of the rotary door 9 and is blown out through the foot blown air passages 5, as indicated by arrow H, from only the foot air outlets 11, to establish the FOOT Mode.

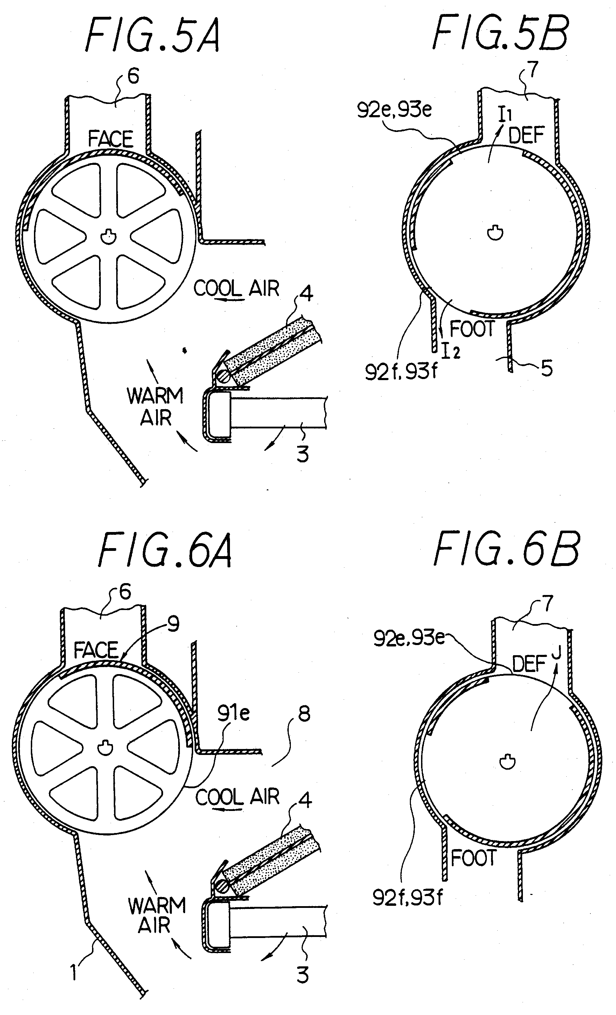

FIGS. 5A and 5B show the position of the rotary door 9 when the FOOT/DEF mode (i.e., foot/defroster compatible mode) is selected. In this case, the central cylindrical member 91 of the rotary door 9 continues to fully close the face blown air passage 6. Simultaneously, the air openings 92f and 93f of the left-hand and right-hand cylindrical members 92 and 93 partially overlap and partially open the foot blown air passages 5, and the air openings 92e and 93e partially overlap and partially open the defroster blown air passages 7. As a result, the air flowing into the interior of the rotary door 9 is blown out through the two blown air passages 5 and 7, as indicated by arrows I1 and I2, from both the foot air outlets 11 and the defroster air outlets 13.

FIGS. 6A and 6B show the position of the rotary door 9 when the DEF mode (i.e., defroster mode) is selected. In this mode, the central cylindrical member 91 of the rotary door 9 continues to fully close the face blown air passages 6. Simultaneously, the left-hand and right-hand cylindrical members 92 and 93 fully close the foot blown air passages 5, and the air openings 92e and 93e completely overlap and fully open the defroster blown air passages 7. As a result, the air flowing into the interior of the rotary door 9 is blown out through the defroster blown air passages 7, as indicated by arrow J, from only the defroster air outlets 13 to implement the DEF mode for clearing the front windshield.

Thus, according to the first embodiment, the multiple blown air passages 5, 6 and 7 can be opened and closed by rotationally displacing the single rotary door 9 to effect the five blow modes.

FIG. 10 shows a second embodiment which has a different arrangement and construction of the blown air passages from those of the first embodiment. Specifically, the blown air passages arranged in the axial direction of the rotary door 9 mounted in the door mounting portion 10 are exemplified by the face blown air passage 6, which is arranged at an axially center portion of the rotary door 9, and side face blown air passages 6a which are arranged at the lefthand and righthand sides of the rotary door 9. These side face blown air passages 6a are connected to side face air outlets 23 which are at the left-hand and right-hand side portions of the vehicle instrument panel. These side face air outlets 23 can blow conditioned air toward the passenger's head close to the passenger compartment side and the window at the passenger compartment side.

Further, the defroster blown air passage 7 is at the back of the face blown air passage 6, relative to the circumferential direction of the door mounting portion 10, and the foot blown air passages 5 are arranged below the door mounting portion 10. The opening for taking the conditioned air into the door mounting portion 10 is below the defroster blown air passage 7 (as located at the back side of FIG. 10).

FIG. 11 shows a third embodiment of the present invention in which the rotary door 9 is constructed not by joining the three split cylindrical members 91, 92 and 93, as in the aforementioned first embodiment, but by integrally molding three semi-cylindrical portions 91', 92' and 93' from a resin. In this embodiment, the assembly of the air conditioning system is remarkably simplified because the rotary door 9 is monolithically molded.

In the foregoing first embodiment, moreover, the air openings 91e, 92e, 93e and 93f of the rotary door 9 are made independent from one another but in a manner to correspond to the individual blown air passages 5, 6 and 7. For the following reasons, however, the multiple air openings 91e, 92e, 93e and 93f preferably have larger circumferential lengths than those of the aforementioned individual blown air passages 5, 6 and 7. In this way, the door operating mechanism may be loosened to displace the stop position of the rotary door 9. However, this displacement can be advantageously absorbed by the aforementioned setting of the circumferential lengths.

As variations on the above designs, the shapes of the air openings 91e, 92e, 93e and 93f in the cylindrical face of the rotary door 9 may be a number of net-shaped pores. Further, the drive structure for the rotary door 9 should not be limited to the direct drive of the rotary door 9 by the blow mode change lever 18 through the control cable 1, but can be implemented using an alternative arrangement where the rotary door 9 is angularly displaced by a drive source such as a motor to be controlled through a control circuit by an electric switch on the basis of the switching action.

Although the present invention has been fully described in connection with the preferred embodiments thereof with reference to the accompanying drawings, it is to be noted that various changes and modifications will become apparent to those skilled in the art. For example, the present invention should not to the foregoing embodiments such as the air conditioning system for a vehicle but can be applied to a variety of systems for opening/closing the air passages so that it can be suitably modified for practical applications without departing from the gist thereof. Such changes and modifications are to be understood as being included within the scope of the present invention as defined by the appended claims.

## Claims

1. An air passage changing system comprising:
a case member (1) defining an air passage;
a door mounting portion (10) in said case member (1) having an arcuate circumferential surface;
a cylindrical rotary door (9) rotatably mounted in said door mounting portion (10), said rotary door (9) having an inlet air passageway (91e) disposed in a circumferential direction of said rotary door (9); and
a door operating mechanism (15-18) for rotating said rotary door (9),
wherein said door mounting portion (10) has a plurality of blown air passages (5-7) along an axis of said rotary door (9), and
wherein said rotary door (9) has a plurality of air openings (91e,f-93e,f) communicating with said air passage through an interior portion of said rotary door (9) for blowing air in a center face flow direction and for blowing air in a side face flow direction different from said center face flow direction,
whereby in accordance with a change in rotational position of said rotary door (9), portions of said air openings (91e,f-93e,f) of said rotary door (9) are selected to be alternately overlapping and non-overlapping with corresponding portions of said plurality of blown air passages (5-7) of said door mounting portion (10) to selectively control a flow of air between said air passage and said plurality of blown air passages (5-7) of said door mounting portion (10),
**characterized in that**
at least one rotational position of said rotary door (9) is such that one of first (91e, f) and second (92e, f, 93e, f) air openings is overlapping with its corresponding portion of said plurality of blown air passages (5-7) while the other of said first and second air openings is non-overlapping with its corresponding portion of said plurality of blow air passages, so that air is blown in one of said center face flow direction and said side face flow direction while air is prevented from being blown in the other of said center face flow direction and said side face flow direction.

2. A vehicular air conditioning system as in claim 1, said system further comprising:
a face air outlet (12) for blowing out conditioned air from said rotary door (9) toward a head of a passenger; and
defroster air outlets (13) for blowing out conditioned air from said rotary door (9) toward a windshield of a vehicle,
wherein said plurality of blown air passages (5-7) of said door mounting portion (10) include face blown air passages (6) communicating with said face air outlet (12), and defroster blown air passages (5) communicating with said defroster air outlets (13).

3. A vehicular air conditioning system as in claim 2, wherein said face blown air passage (6) is arranged in an axially central portion of said rotary door (9), and said defroster blown air passages (5) are arranged in opposite axially side portions proximate said central face blown air passage (6).

4. A vehicular air conditioning system as in claim 1, further comprising:
a central face air outlet (12), for blowing out conditioned air toward a head of a passenger, proximate to a central portion of a passenger compartment; and
side face air outlets (6a), capable of blowing out conditioned air toward both said head of said passenger, proximate to side portions of said compartment and windows at said side portions of said compartment,
wherein said plurality of blown air passages of said door mounting portion (5-7) include a central face blown air passage (6) communicating with said central face air outlet (12), and side face blown air passages (6a) communicating with said central face air outlet (12).

5. A vehicular air conditioning system as in claim 4, wherein said central face blown air passage (6) is arranged in an axially central portion of said rotary door (9), and said side face blown air passages (6a) are arranged at opposite sides of said central face blown air passage (6) in said axially central portion.

6. A vehicular air conditioning system as in any one of claims 1-5, further comprising:
foot air outlets (11) for blowing out conditioned air toward feet of a passenger; and
foot blown air passages communicating with said foot air outlets (11) and arranged in said door mounting portion (10) in positions circumferentially different from said plurality of blown air passages (5-7),
wherein communications between said foot blown air passages (11) and said air passage are also selectively controlled according to said change in said rotational position of said rotary door (9).

7. A vehicular air conditioning system as set forth in any one of claims 1-5, wherein a plurality air openings of said rotary door of said rotary door (91e,f-93e,f) are disposed independently of one another to correspond to said blown air passages (5-7), and said plurality of air openings (91e,f-93e,f) have longer circumferential lengths than those of said individual blown air passages (5-7).

8. A vehicular air conditioning system as in any one of claims 1-7, wherein said rotary door (9) is cylindrically shaped and comprises a plurality of cylindrical elements (91-93) split in an axial direction thereof.

9. A vehicular air conditioning system as in any of claims 1-7, wherein said rotary door is integrally molded from a resin.

## Patentansprüche

1. Luftkanal-Schaltsystem, umfassend:
ein Gehäuseelement (1), das einen Luftkanal begrenzt bzw. bildet;
einen Klappenanbaubereich (10) in dem Gehäuseelement (1) mit einer bogenförmigen Umfangsfläche;
ein zylindrische Drehklappe (9), die in den Klappenanbaubereich (10) drehbar angebracht ist, wobei die Drehklappe (9) einen Einlaßluftdurchtritt (91e) aufweist, der in der Umfangsrichtung der Drehklappe (9) angeordnet sind; und
eine Klappenbetätigungseinrichtung (15-18) zum Drehen der Drehklappe (9), wobei der Klappenanbringungsbereich (10) eine Vielzahl von Blasluftkanälen (5-7) entlang der Achse der Drehklappe (9) aufweist und
wobei die Drehklappe (9) eine Vielzahl von Luftoffnungen (91e, f - 93e, f) aufweist, die mit dem Luftkanal über den Innenbereich der Drehklappe (9) zum Blasen von Luft in einer zentralen Kopfraum-Strömungsrichtung und zum Blasen von Luft in einer seitlichen Kopfraum-Strömungsrichtung aufweist, die sich von der zentralen Kopfraum-Strömungsrichtung unterscheidet,
wodurch bei einer Veränderung der Drehposition der Drehklappe (9) Bereiche der Luftöffnungen (91e, f - 93e, f) der Drehklappe (9) gewählt werden, um entsprechende Bereiche der Vielzahl von Blasluftkanälen (5-7) des Klappenanbaubereichs (10) zu überlappen oder nicht zu überlappen, um die Strömung von Luft zwischen dem Luftkanal und der Vielzahl von Blasluftkanälen (5-7) des Klappenanbaubereichs (10) selektiv zu steuern,
**dadurch gekennzeichnet**, daß
mindestens eine Drehposition der Drehklappe (9) eine solche ist, daß eine Öffnung von erster (91e, f) und zweiter (92e, f, 93e, f) Luftöffnung den entsprechenden Bereich der Vielzahl von Blasluftkanälen (5-7) überlappt, während die andere Öffnung der genannten ersten und der genannten zweiten Luftöffnung den entsprechenden Bereich der Vielzahl von Blasluftkanälen nicht überlappt, so daß Luft in einer Richtung von zentraler Kopfraum-Strömungsrichtung und seitlicher Kopfraum-Strömungsrichtung geblasen wird, während die Luft daran gehindert ist, in der anderen Richtung von zentraler Kopfraum-Strömungsrichtung und seitlicher Kopfraum-Strömungsrichtung geblasen zu werden.

2. Fahrzeug-Klimaanlage nach Anspruch 1, wobei die Anlage weiter umfaßt:
einen Kopfraum-Luftauslaß (12) zum Ausblasen klimatisierter Luft von der Drehklappe (9) aus in Richtung zu dem Kopf eines Fahrgastes; und
Defroster-Luftauslässe (13) zum Ausblasen klimatisierter Luft von der Drehklappe (9) aus in Richtung zu der Windschutzscheibe des Fahrzeugs,
wobei die Vielzahl von Blasluftkanälen (5-7) des Klappenanbaubereichs (10) Kopfraum-Blasluftkanäle (6), die mit dem Kopfraum-Luftauslaß (12) in Verbindung stehen, und Defroster-Blasluftkanäle (5) aufweist, die mit den Defroster-Luftauslässen (13) in Verbindung stehen.

3. Fahrzeug-Klimaanlage nach Anspruch 2, wobei der Kopfraum-Blasluftkanal (6) in dem axial zentralen Bereich der Drehklappe (9) angeordnet ist und die Defroster-Blasluftkanäle (5) in einander gegenüberliegenden axial seitlichen Bereichen in der Nähe des zentralen Kopfraum-Blasluftkanals (6) angeordnet sind.

4. Fahrzeug-Klimaanlage nach Anspruch 1, weiter umfassend:
einen zentralen Kopfraum-Luftauslaß (12) zum Ausblasen klimatisierter Luft in Richtung zu dem Kopf eines Fahrgastraums in der Nähe des zentralen Bereichs des Fahrgastraums; und
seitliche Kopfraum-Luftauslässe (6a), die das Ausblasen klimatisierter Luft in Richtung sowohl zu dem Kopf des Fahrgastes in der Nähe der seitlichen Bereiche des Fahrgastraums als auch in Richtung auf die Scheiben an den seitlichen Bereichen des Fahrgastraums gestatten,
wobei die Vielzahl von Blasluftkanälen des Klappenanbaubereichs (5-7) einen zentralen Kopfraum-Blasluftkanal (6), der mit dem zentralen Kopfraum-Luftauslaß (12) in Verbindung steht, und seitliche Kopfraum-Blasluftkanäle (6a) aufweist, die mit dem zentralen Kopfraum-Luftauslaß (12) in Verbindung stehen.

5. Fahrzeug-Klimaanlage nach Anspruch 4, wobei der zentrale Kopfraum-Blasluftkanal (6) in einem axial zentralen Bereich der Drehklappe (9) angeordnet ist und die seitlichen Kopfraum-Blasluftkanäle (6a) an gegenüberliegenden Seiten des zentralen Kopfraum-Blasluftkanals (6) in dem axial zentralen Bereich angeordnet sind.

6. Fahrzeug-Klimaanlage nach irgendeinem der Ansprüche 1-5, weiter umfassend:
Fußraum-Luftauslässe (11) zum Ausblasen klimatisierter Luft in Richtung auf die Füße eines Fahrgastes;
Fußraum-Blasluftkanäle, die mit den Fußraum-Luftauslässen (11) in Verbindung stehen und in dem Klappenanbaubereich (10) an Positionen angeordnet sind, die sich in Umfangsrichtung von denjenigen der Vielzahl von Blasluftkanälen (5-7) unterscheiden,
wobei die Verbindungen zwischen den Fußraum-Blasluftkanälen (11) und dem genannten Luftkanal ebenfalls selektiv entsprechend der Veränderung der Drehposition der Drehklappe (9) gesteuert werden.

7. Fahrzeug-Klimaanlage nach irgendeinem der Ansprüche 1-5, wobei die Vielzahl von Luftöffnungen der Drehklappe (91e, f-93e, f) voneinander unabhängig angeordnet ist, dies derart, daß sie den Blasluftkanälen (5-7) entsprechen, und die Vielzahl der Luftöffnungen (21e, f-93e, f) längere Umfangslängen als diejenigen der einzelnen Blasluftkanäle (5-7) aufweist.

8. Fahrzeug-Klimaanlage nach irgendeinem der Ansprüche 1-7, wobei die Drehklappe (9) zylindrisch gestaltet ist und eine Vielzahl von zylindrischen Elementen (91-93) aufweist, die in ihrer Axialrichtung voneinander getrennt sind.

9. Fahrzeug-Klimaanlage nach irgendeinem der Ansprüche 1-7, wobei die Drehklappe einstückig aus einem Kunststoff ausgebildet bzw. gegossen ist.

## Revendications

1. Système de commande de passages d'air comprenant :
un élément de boîtier (1) définissant un passage d'air,
une partie de montage de volet (10) dans ledit élément de boîtier (1) présentant une surface circonférentielle en forme d'arc,
un volet rotatif cylindrique (9) monté avec faculté de rotation dans ladite partie de montage de volet (10), ledit volet rotatif (9) comportant un passage d'air d'admission (91e) disposé selon une direction suivant la circonférence dudit volet rotatif (9), et
un mécanisme de manoeuvre du volet (15-18) destiné à faire tourner ledit volet rotatif (9),
dans lequel ladite partie de montage de volet (10) comporte une pluralité de passages d'air soufflé (5-7) le long de l'axe dudit volet rotatif (9), et
dans lequel ledit volet rotatif (9) comporte une pluralité d'ouvertures de passage d'air (91e,f à 93e,f) communiquant avec ledit passage d'air par l'intermédiaire d'une partie intérieure dudit volet rotatif (9), destinées à souffler de l'air suivant une direction de circulation centrale vers le visage, et destinées à souffler de l'air suivant une direction de circulation latérale vers le visage, différente de ladite direction de circulation centrale vers le visage,
grâce à quoi, conformément à une modification de la position en rotation dudit volet rotatif (9), des parties desdites ouvertures de passage d'air (91e,f à 93e,f) dudit volet rotatif (9) sont sélectionnées de façon à être alternativement en recouvrement et en non-recouvrement avec des parties correspondantes de ladite pluralité de passages d'air soufflé (5 à 7) de ladite partie de montage de volet (10), afin de commander de façon sélective une circulation d'air entre ledit passage d'air et ladite pluralité de passages d'air soufflé (5 à 7) de ladite partie de montage de volet (10),
caractérisé en ce que au moins une position en rotation dudit volet rotatif (9) est telle que l'une des premières (91e,f) et secondes (91e,f à 93e,f) ouvertures de passages d'air est en recouvrement avec sa partie correspondante de ladite pluralité de passages d'air soufflé (5 à 7) tandis que l'autre desdites premières et secondes ouvertures de passages d'air n'est pas en recouvrement avec sa partie correspondante de ladite pluralité de passages d'air soufflé, de sorte que l'air est soufflé dans l'une de ladite direction de circulation centrale vers le visage et de ladite direction de circulation latérale vers le visage tandis que l'air est empêché d'être soufflé dans l'autre de ladite direction de circulation centrale vers le visage et de ladite direction de circulation latérale vers le visage.

2. Système de conditionnement d'air pour véhicule selon la revendication 1, ledit système comprenant en outre :
une bouche de sortie d'air vers le visage (12) destinée à refouler de l'air conditionné depuis ledit volet rotatif (9) en direction de la tête d'un passager, et
des bouches de sortie d'air vers le dégivreur (13) destinées à refouler de l'air conditionné depuis ledit volet rotatif (9) en direction du pare-brise du véhicule,
dans lequel ladite pluralité de passages d'air soufflé (5 à 7) de ladite partie de montage de volet (10) comprend des passages d'air soufflé vers le visage (6) communiquant avec ladite bouche de sortie d'air vers le visage (12), et des passages d'air soufflé vers le dégivreur (7) communiquant avec lesdites bouches de sortie d'air vers le dégivreur (13).

3. Système de conditionnement d'air pour véhicule selon la revendication 2, dans lequel ledit passage d'air soufflé vers le visage (6) est agencé dans une partie axiale centrale dudit volet rotatif (9), et lesdits passages d'air soufflé vers le dégivreur (7) sont agencés dans des parties latérales opposées par rapport à l'axe, à proximité dudit passage central d'air soufflé vers le visage (6).

4. Système de conditionnement d'air pour véhicule selon la revendication 1, comprenant en outre :
une bouche de sortie centrale d'air vers le visage (12), destinée à refouler de l'air conditionné en direction de la tête d'un passager, à proximité d'une partie centrale d'un habitacle des passagers, et
des bouches de sortie latérales d'air vers le visage (23) pouvant refouler de l'air conditionné en direction à la fois de ladite tête dudit passager, à proximité des parties latérales dudit habitacle et vers les fenêtres au niveau desdites parties latérales dudit habitacle,
dans lequel ladite pluralité de passages d'air soufflé de ladite partie de montage de volet (5 à 7) comprend un passage central d'air soufflé vers le visage (6) communiquant avec ladite bouche de sortie centrale d'air vers le visage (12), et des passages latéraux d'air soufflé vers le visage (6a) communiquant avec ladite bouche de sortie centrale d'air vers le visage (12).

5. Système de conditionnement d'air pour véhicule selon la revendication 4, dans lequel ledit passage central d'air soufflé vers le visage (6) est agencé dans une partie axiale centrale dudit volet rotatif (9), et lesdits passages latéraux d'air soufflé vers le visage (6a) sont agencés au niveau de côtés opposés dudit passage central d'air soufflé vers le visage (6) dans ladite partie axiale centrale.

6. Système de conditionnement d'air pour véhicule selon l'une quelconque des revendications 1 à 5, comprenant en outre :
des bouches de sortie d'air vers les pieds (11) destinées à refouler de l'air conditionné en direction des pieds d'un passager, et
des passages d'air soufflé vers les pieds communiquant avec lesdites bouches de sortie d'air vers les pieds (11) et agencés dans ladite partie de montage de volet (10) à des emplacements différents suivant la circonférence de ceux de ladite pluralité de passages d'air soufflé (5 à 7), en communication entre lesdits passages d'air soufflé vers les pieds (11) et ledit passage d'air est également commandé de façon sélective conformément à ladite modification de ladite position en rotation dudit volet rotatif (9).

7. Système de conditionnement d'air pour véhicule selon l'une quelconque des revendications 1 à 5, dans lequel une pluralité d'ouvertures de passages d'air dudit volet rotatif (91e,f à 93e,f) sont disposées indépendamment les unes des autres de façon à correspondre auxdits passages d'air soufflé (5 à 7), et ladite pluralité d'ouvertures de passages d'air (91e,f à 93e,f) présentent des longueurs suivant la circonférence plus importantes que celles desdits passages individuels d'air soufflé (5 à 7).

8. Système de conditionnement d'air pour véhicule selon l'une quelconque des revendications 1 à 7, dans lequel ledit volet rotatif (9) est de forme cylindrique, et comprend une pluralité d'éléments cylindriques (91 à 93) divisés suivant une direction axiale de celui-ci.

9. Système de conditionnement d'air pour véhicule selon l'une quelconque des revendications 1 à 7, dans lequel ledit volet rotatif est moulé en une seule pièce à partir d'une résine.
